# FASCICULE DE BREVET EUROPEEN

(11) **EP 4 296 476 B1**
(45) Date de publication et mention de la délivrance du brevet: **15.04.2026**
(21) Numéro de dépôt: 22315128.3
(22) Date de dépôt: 24.06.2022
(51) Int. Cl.: F01M 11/00, F01D 25/18, F02C 7/06

(54) **RESERVOIR D'HUILE POUR TURBOMACHINE COMPATIBLE G NEGATIF AVEC CIRCULATION CYCLONIQUE**
ÖLTANK FÜR EINE G-NEGATIV KOMPATIBLE TURBOMASCHINE MIT ZYKLONABSCHEIDER
OIL TANK FOR TURBINE ENGINE G NEGATIVE COMPATIBLE WITH CYCLONIC CIRCULATION

(43) Date de publication de la demande: 27.12.2023
(73) Titulaire: Safran Aero Boosters, 4041 Herstal (BE); Safran Aircraft Engines, 75015 Paris (FR)
(72) Inventeur: BOUGELET, Stephane Alain Luc Ghislain, Herstal (BE); BORLON, Quentin, Herstal (BE); ORIOL, Sébastien, Melun (FR)
(74) Mandataire: Ipsilon Luxembourg

(56) Documents cités:
- EP-A1- 1 104 742
- EP-A1- 2 801 707
- EP-A2- 3 674 552
- FR-A1- 2 621 562
- FR-A1- 3 010 133
- FR-A1- 3 107 319

## Description

### Domaine

L'invention se rapporte au domaine des réservoirs de turbomachine. Plus précisément, l'invention se rapporte au domaine des réservoirs d'huile utilisés pour lubrifier des composants de turbomachine, notamment comprenant une hélice non carénée à pas variable et/ou un redresseur à pas variable.

### Art antérieur

Des turbomachines d'aéronef comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour Unducted Single Fan).

Ces turbomachines se distinguent par l'utilisation d'une hélice à l'extérieur de la nacelle (non carénée) au lieu d'une soufflante interne.

L'hélice ou les hélices formant la partie propulsive comprennent généralement un système d'actionnement du pas des aubes de(s) l'hélice(s), également désigné par système à calage variable. Un tel système permet aux aubes de l'hélice de s'orienter selon les besoins des phases de vol de l'aéronef (décollage, croisière, atterrissage, etc.) afin d'assurer une gestion de la poussée dans tous les cas de vol de la turbomachine.

Dans le cas des turbomachines avec une seule hélice non carénée et un redresseur, ce dernier peut aussi comprendre un système à calage variable de manière à améliorer les performances de la turbomachine. Un exemple d'une telle turbomachine est divulgué par le document de brevet publié FR 3 107 319 A1.

Les systèmes à calage variables peuvent nécessiter une alimentation permanente en huile afin de permettre l'actionnement du pas des aubes et la gestion de la poussée du moteur dans tous les cas de vol de la turbomachine (nominaux et extrêmes). Dans l'état de l'art, ces systèmes sont alimentés par un circuit de lubrification principal permettant d'assurer une alimentation en huile des différents composants du moteur (paliers, réducteur, etc.) afin d'assurer des fonctions de lubrification et/ou de refroidissement. Ce circuit est alimenté en huile par un réservoir principal de la turbomachine comprenant entre autres une entrée d'huile en partie supérieure et une sortie en partie inférieure, ce qui permet une alimentation en huile lors des attitudes de vol sous pesanteur ou facteur de charge positif (G positif).

Si de tels réservoirs donnent entière satisfaction lorsque l'aéronef effectue des vols dans des cas de vol en G positif, en revanche, lorsqu'il s'agit de phases de vol sous facteur de charge nul ou négatif (G nul ou G négatif), i.e., en cas de manœuvre de l'aéronef ou en cas de bourrasque de vent ascendante, ces réservoirs n'assurent plus complétement l'alimentation en huile du système d'actionnement du pas.

En effet, les phases de vol en G nul ou G négatif sont des phases de vol temporaires (durent généralement moins de 30 secondes pour les avions civils) pour lesquelles l'aéronef est soumis à des accélérations négatives, par exemple, lorsqu'il subit de brusques diminutions d'altitude.

A cet effet, l'huile contenue dans le réservoir principal est alors renversée, l'huile ne se situe plus aux abords de la sortie en partie inférieure, ce qui génère une coupure dans l'alimentation en huile, entrainant un passage d'air vers le(s) circuit(s) à calage variable, engendrant ainsi des conséquences nuisibles sur le fonctionnement de la turbomachine pouvant induire une perte de contrôle de l'aéronef.

Il est possible d'utiliser des réservoirs tels que ceux qui équipent des avions de chasse, où les phases de vol en G négatif sont fréquentes et indispensables. Cependant, ces réservoirs sont pressurisés, ce qui implique un surpoids important, ainsi qu'un surcoût élevé, incompatible avec les turbomachines comprenant au moins une hélice non carénée.

Par ailleurs, une solution connue permettant d'éviter de nuire au circuit d'actionnement du pas des hélices consiste en cas de G négatif, d'assurer l'alimentation en huile au moyen d'un autre système que le réservoir d'huile principal de la turbomachine. Toutefois, une telle solution implique un encombrement et une masse importante au sein de la turbomachine et une gestion complexe de l'acheminement de l'huile vers le système à calage variable.

Le document de brevet publié FR 3 010 133 A1 divulgue un réservoir comprenant une cloison inclinée munie à ses extrémités d'orifices traversants pour une alimentation continue de la turbomachine.

Le document FR 2 621 562 A1 a trait à un réservoir de turbomachine comprenant une enceinte principale et une enceinte auxiliaire ayant une cloison pourvue d'orifices sur une plaque et une membrane apte à venir obturer les orifices en cas de vol en gravité négative.

Cependant, les solutions proposées par les documents de l'art antérieur présentent une marge d'amélioration afin de permettre, par exemple, un plus grand volume d'huile disponible pour alimenter les composants de la turbomachine en cas de vol en G négatif, et sans entraver ledit volume lors du retour en G positif.

### Résumé de l'invention

### Problème technique

La présente invention a pour objectif de pallier au moins un des inconvénients de l'état de la technique susmentionné. Plus particulièrement, l'invention a pour objectif de proposer un réservoir d'huile dont la conception est telle qu'elle permet à l'aéronef d'effectuer, en toute sécurité, des phases temporaires de vol en pesanteur négative, sans augmenter le poids et le coût du réservoir.

### Solution technique

L'invention a trait à un réservoir d'huile pour turbomachine d'aéronef, comprenant :
- une enceinte principale apte à contenir l'huile ;
- une entrée d'huile mélangée à de l'air, disposée sur l'enceinte principale ;
- une sortie d'huile ;
- une enceinte auxiliaire, comprenant une paroi enveloppante , et deux parois d'extrémité adjacentes à ladite paroi enveloppante, au moins une des deux parois d'extrémité comprenant au moins un passage d'huile avec l'intérieur de l'enceinte principale,
- au moins une entrée auxiliaire débouchant de manière tangentielle à la paroi enveloppante et traversant l'enceinte auxiliaire pour une connexion à un circuit auxiliaire ;
- une sortie auxiliaire, tangentielle à un tronçon de plus grand diamètre de la paroi enveloppante, ladite sortie auxiliaire traversant l'enceinte auxiliaire pour une connexion au circuit auxiliaire, la sortie d'huile étant disposée sur l'enceinte auxiliaire ou sur l'enceinte principale.

L'écoulement d'huile depuis l'au moins une entrée auxiliaire jusqu'à la sortie auxiliaire permet à l'huile de s'écouler suivant une trajectoire spiralée et ainsi y subir des forces centrifuges stabilisant l'écoulement. Cet écoulement est stabilisé en particulier à la sortie auxiliaire de manière à ce que celle-ci soit constamment alimentée en huile.

Selon un mode avantageux de l'invention, la paroi enveloppante est intégralement formée avec l'enceinte principale, et ladite paroi enveloppante comprend préférentiellement une forme circulaire conique.

Selon un mode avantageux de l'invention, l'au moins une entrée auxiliaire débouche de manière tangentielle à un tronçon de plus petit diamètre de la paroi enveloppante.

Selon un mode avantageux de l'invention, l'au moins un passage d'huile est en position centrale sur la paroi d'extrémité correspondante.

Selon un mode avantageux de l'invention, l'au moins un passage d'huile comprend un canal s'étendant axialement depuis la paroi d'extrémité correspondante à l'intérieur de l'enceinte auxiliaire.

Selon un mode avantageux de l'invention, l'au moins un canal s'étend sur au moins 30% ou 20% d'une étendue axiale totale de l'enceinte auxiliaire.

Selon un mode avantageux de l'invention, l'au moins une entrée auxiliaire est à proximité d'une des deux parois d'extrémité.

Selon un mode avantageux de l'invention, la sortie auxiliaire est à proximité d'une des deux parois d'extrémité.

Préférentiellement, l'expression « à proximité de » signifie que l'au moins une entrée auxiliaire et/ou la sortie auxiliaire, est à un quelconque endroit d'un quart de la paroi enveloppante adjacent à une des deux parois d'extrémité (suivant l'axe principal), i.e., l'au moins une entrée et/ou sortie auxiliaire pouvant être accolée(s) à une des deux parois d'extrémité, ou éloignée(s) d'au plus 25% de l'une des deux parois d'extrémité.

Selon un mode avantageux de l'invention, la paroi enveloppante présente un angle de conicité compris entre 0° et 50°.

Selon un mode avantageux de l'invention, la paroi enveloppante comprend une seule conicité.

Selon un mode avantageux de l'invention, la paroi enveloppante comprend deux conicités opposées, la sortie auxiliaire étant située à une frontière entre les deux conicités.

Selon un mode avantageux de l'invention, l'au moins une entrée auxiliaire comprend une entrée auxiliaire à chacune des deux extrémités axiales de la paroi enveloppante.

Selon un mode avantageux de l'invention, au moins 80% d'un volume de l'enceinte auxiliaire est situé dans une moitié inférieure de l'enceinte principale, lorsque le réservoir d'huile est orienté suivant une position normale de montage.

Selon un mode avantageux de l'invention, la paroi enveloppante présente un axe principal coaxial au canal ou incliné de moins de 45° par rapport audit canal.

Préférentiellement, la position normale de montage du réservoir correspond à une position dans laquelle l'enceinte principale se trouve au-dessus de l'enceinte auxiliaire suivant le sens de la pesanteur (effort perpendiculaire à l'horizontal et dirigé vers le bas). A cet effet, l'enceinte principale, l'enceinte auxiliaire et le canal peuvent être inclinés lors du montage sur la turbomachine ou peuvent avoir des formes particulières. Par exemple, l'enceinte principale est préférentiellement sensiblement cylindrique, mais peut avoir une forme sensiblement oblongue et/ou incurvée.

L'invention a également trait à un système hydraulique pour turbomachine d'aéronef comprenant :
- un réservoir d'huile ;
- un circuit de lubrification de la turbomachine, relié hydrauliquement au réservoir d'huile ;
- un circuit de commande hydraulique d'au moins un actuateur hydraulique, relié hydrauliquement au réservoir d'huile ;
remarquable en ce que le réservoir d'huile est selon l'invention, le circuit de lubrification étant relié hydrauliquement à l'entrée d'huile mélangée à de l'air et à la sortie d'huile, le circuit de commande hydraulique étant relié hydrauliquement à l'au moins une entrée auxiliaire et à la sortie auxiliaire.

L'invention a également trait à une turbomachine comprenant :
- une hélice non carénée propulsant un flux d'air entrant, ladite hélice comprenant des aubes à calage variable actionnées par au moins un actuateur hydraulique ;
- un système hydraulique apte à assurer une lubrification de la turbomachine et à commander l'au moins un actuateur hydraulique ;
remarquable en ce que le système hydraulique est selon l'invention.

L'invention a également trait à une turbomachine comprenant :
- une hélice non carénée propulsant un flux d'air entrant, ladite hélice comprenant un système à calage variable permettant d'actionner le pas des aubes de l'hélice ;
- un réservoir d'huile pour la lubrification de composants de la turbomachine, remarquable en ce que ledit réservoir comprend :
   - une enceinte principale apte à contenir l'huile ;
   - une entrée d'huile mélangée à de l'air, disposée sur l'enceinte principale ;
   - une sortie d'huile, disposée sur l'enceinte principale ;
   - une enceinte auxiliaire disposée à l'intérieur de l'enceinte principale, comprenant une paroi enveloppante, et deux parois d'extrémité adjacentes à ladite paroi enveloppante, au moins une des deux parois d'extrémité comprenant au moins un passage d'huile avec l'intérieur de l'enceinte principale ;
   - au moins une entrée auxiliaire débouchant de manière tangentielle à un tronçon de plus petit diamètre de la paroi enveloppante et traversant l'enceinte principale pour une connexion à un circuit auxiliaire ;
   - une sortie auxiliaire, tangentielle à un tronçon de plus grand diamètre de la paroi enveloppante, ladite sortie auxiliaire traversant l'enceinte principale pour une connexion au circuit auxiliaire.

Selon un mode avantageux de l'invention, le système à calage variable est un premier système à calage variable, et ladite turbomachine comprend, en outre, un redresseur comprenant une pluralité d'aubes statoriques s'étendant depuis un carter fixe, ledit redresseur comprenant un deuxième système à calage variable, et en ce que la sortie auxiliaire est hydrauliquement reliée à un deuxième circuit fermé comprenant des composants du premier système et/ou du deuxième système à calage variable de la turbomachine.

### Avantages de l'invention

L'invention est particulièrement avantageuse en ce qu'elle permet de garantir une alimentation en huile des différents composants de la turbomachine, dont notamment le(s) système(s) de commande hydraulique d'au moins un actuateur hydraulique, en l'occurrence le(s) système(s) à calage variable, et cela tout en assurant que ce(s) dernier(s) soi(en)t alimenté(s) en huile sans aucune présence d'air et sans interruption d'alimentation lors des phases de vol en gravité nulle et en gravité négative. Ainsi, la commande hydraulique du système d'actionnement du pas de l'hélice de la turbomachine peut rester opérationnelle lors de toutes les phases de vol de l'aéronef.

Avantageusement, la simplicité de l'architecture du réservoir d'huile de la présente invention lui permet d'assurer un fonctionnement fiable. De plus, le réservoir est compact, ce qui permet de réduire l'encombrement global et la masse de la turbomachine.

### Description des dessins

[Fig 1] est une vue schématique en coupe longitudinale d'une turbomachine d'aéronef selon l'invention ;
[Fig 2] illustre un schéma d'un système hydraulique la turbomachine de la figure 1 ;
[Fig 3] représente une vue en coupe d'un réservoir d'huile selon un premier mode de réalisation de l'invention lors d'une phase de vol de l'aéronef en pesanteur négative ;
[Fig 4] représente une vue en coupe d'une alternative au réservoir d'huile de la figure 3 ;
[Fig 5] illustre une vue en coupe d'une variante d'une enceinte auxiliaire du réservoir de la figure 3 ;
[Fig 6] est un schéma d'une vue d'au-dessus d'une paroi enveloppante du réservoir d'huile de la figure 3 ;
[Fig 7] représente une vue en coupe d'un réservoir d'huile selon un deuxième mode de réalisation de l'invention lors d'une phase de vol de l'aéronef en pesanteur négative.

### Description détaillée

Les figures montrent les éléments de manière schématique et ne sont pas représentées à l'échelle. En particulier, certaines dimensions sont agrandies pour faciliter la lecture des figures.

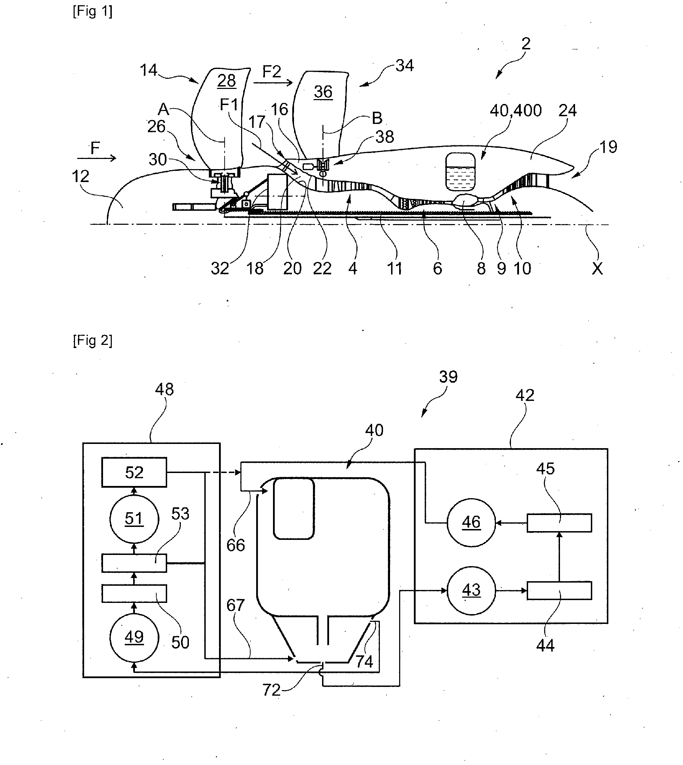

La figure 1 illustre schématiquement une vue en coupe longitudinale d'une turbomachine d'aéronef selon l'invention. Il s'agit d'une turbomachine connue sous l'expression anglaise « open rotor » ou « unducted fan », et particulièrement d'une turbomachine USF « Unducted Single Fan ».

Dans la description qui va suivre, les termes « interne » et « externe » renvoient à un positionnement par rapport à l'axe de rotation d'une turbomachine, et ici suivant l'axe longitudinal X (et même de gauche à droite sur la figure 1). Les termes « radial », « interne » et « externe » sont définis par rapport à une direction radiale perpendiculaire à l'axe longitudinal X. L'amont et l'aval sont en référence au sens d'écoulement d'un flux dans la turbomachine. Par ailleurs, les éléments illustrés dans les figures qui sont identiques ou sensiblement identiques et/ou avec les mêmes fonctions sont représentés par les mêmes références numériques.

La turbomachine 2 comprend comporte typiquement d'amont en aval, un premier niveau de compression, dit compresseur basse pression 4, ainsi qu'un deuxième niveau de compression, dit compresseur haute pression 6, une chambre de combustion 8 suivie d'une turbine haute pression 9 et d'une turbine basse pression 10.

La turbomachine 2 comprend une hélice 14 agencée en amont d'un bec de séparation 16 porté par un carter externe 24 et apte à séparer le flux d'air F en un flux secondaire F2 et un flux primaire F1 circulant dans une veine primaire 18 et traversant les différents niveaux susmentionnés de la turbomachine 2.

La veine primaire 18 est délimitée radialement par une paroi radialement interne 20 et une paroi radialement externe 22. La paroi radialement interne 20 est portée par le carter interne 12. La paroi radialement externe 22 est portée par le carter externe 24. Le flux d'air primaire F1 entre dans la veine primaire 18 par une entrée d'air annulaire 17 et s'en échappe par une tuyère primaire 19 qui est disposée en aval de ladite veine primaire 18. Le flux primaire F1 peut être accéléré par la tuyère primaire 19 de sorte à générer une réaction de poussée nécessaire au vol de l'aéronef.

La turbomachine comprend un carter rotatif 26 centré sur l'axe longitudinal X et tournant autour de ce dernier. Le carter rotatif 26 porte une couronne de pales 28 mobiles formant l'hélice 14. Le carter rotatif 26 est monté mobile par rapport au carter interne 12 qui le porte.

Le flux d'air F qui entre dans la turbomachine traverse les pales 28 de l'hélice 14 pour former le flux d'air secondaire F2. Ce dernier circule autour du carter externe 24. Chaque pale 28 de l'hélice 14 comprend un pied 30 et une partie aérodynamique s'étendant radialement vers l'extérieur depuis le pied 30, ce dernier comprenant un pivot. En effet, le pied 30 est monté pivotant autour d'un axe A (perpendiculaire à X) permettant ainsi le pivotement des pales 28 de l'hélice 14. Ce pivotement est géré par un premier système à calage variable de la turbomachine 2.

Le compresseur basse pression 4 et la turbine basse pression 10 sont reliés mécaniquement par un arbre basse pression 11, ce dernier entraîne l'hélice 14 par l'intermédiaire d'un réducteur 32, l'hélice 14 comprime l'air à l'extérieur du carter externe 24 et fournit la majeure partie de la poussée de la turbomachine 2. Le réducteur 32 peut être de type à train planétaire.

La turbomachine 2 comprend un redresseur 34 traversé par le flux secondaire F2, ce dernier étant une partie du flux d'air F propulsée radialement extérieurement à l'axe longitudinal X. Le redresseur 34 comprend une pluralités d'aubes de stator 36 (ou aubes statoriques ou aubes fixes) connues sous l'acronyme anglais «OGV» (Outlet Guide Vane). Les aubes de stator 36 sont réparties régulièrement autour de l'axe longitudinal X et s'étendent radialement dans le flux d'air secondaire F2. Les aubes de stator 36 sont portées par une structure fixe solidaire du carter externe 24. En particulier, chaque aube de stator 36 s'étend radialement depuis un pied 38, ce dernier est monté pivotant autour d'un axe B (perpendiculaire à X) permettant le pivotement des aubes statoriques 36 du redresseur 34. Ce pivotent est géré par un deuxième système à calage variable de la turbomachine 2.

La turbomachine 2 comprend, en outre, un réservoir d'huile 40, 400 pour la lubrification et/ou le refroidissement des composants de ladite turbomachine 2. A cet effet, le réservoir d'huile 40, 400 est le réservoir d'huile principal de la turbomachine 2, et permet en outre, d'alimenter en huile les premier et deuxième systèmes à calage variable de la turbomachine 2. De préférence, le réservoir 40, 400 est agencé au droit du carter externe 24. L'architecture et le fonctionnement du réservoir d'huile 40, 400 seront détaillés plus loin dans la présente description.

Alternativement, le réservoir d'huile 40, 400 de la présente invention est capable d'alimenter en huile une turbomachine comprenant un système à calage variable uniquement au niveau du redresseur (ayant une hélice à aubes fixes dépourvue de système à calage variable).

La figure 2 est un schéma d'un système hydraulique 39 la turbomachine de la figure 1. Le système hydraulique 39 comprend différents circuits fermés reliés au réservoir d'huile de l'invention de manière à assurer une lubrification de la turbomachine En référence à la figure 2, le réservoir d'huile 40 est relié hydrauliquement à un circuit de lubrification et refroidissement 42 du moteur de la turbomachine, ce circuit comprend une pompe d'alimentation 43, des échangeurs 44 et des enceintes moteur 45, ces dernières assurent la lubrification des roulements, des réducteurs et des paliers et permettent de garantir l'étanchéité air/huile du moteur.

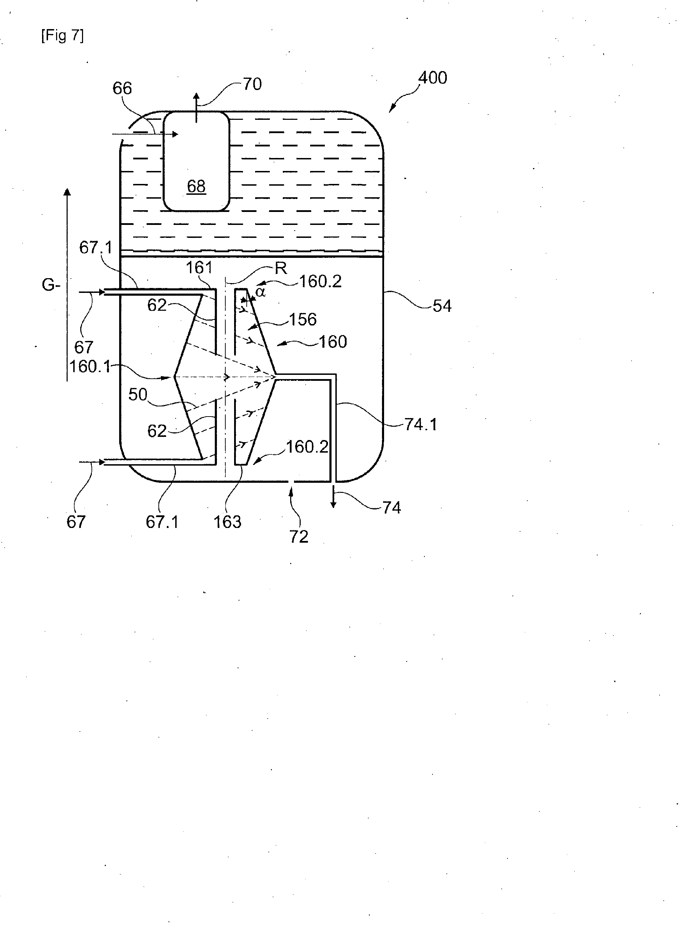

La figure 2 illustre le réservoir 40 selon un premier mode de réalisation, mais le système hydraulique 39 peut également comprendre un réservoir d'huile 400 selon un deuxième mode de réalisation illustré à la figure 7. Ces deux modes de réalisation seront amplement détaillés plus loin dans la présente description.

Le circuit de lubrification 42 comprend, en outre, au moins une pompe de récupération 46 configurée pour récupérer l'huile des enceintes moteur 45 et les diriger vers le réservoir d'huile 40. Le circuit 42 peut correspondre à un groupe de lubrification de la turbomachine.

Le réservoir d'huile 40 est également relié hydrauliquement à un circuit 48 d'actionnement du pas des aubes de l'hélice, aussi désigné par un circuit de commande hydraulique 48 permettant d'alimenter en huile le premier système à calage variable de la turbomachine de la figure 1, à savoir de l'hélice 14.

Le circuit de commande hydraulique 48 peut aussi alimenter en huile le deuxième système à calage variable de la turbomachine de la figure 1, à savoir du redresseur 34, indépendamment ou en combinaison avec le premier système à calage variable.

Le circuit de commande hydraulique 48 peut assurer des fonctions de lubrification et/ou de refroidissement du système à calage variable. A cet égard, le circuit 48 comprend une pompe de gavage 49 récupérant l'huile d'une partie inférieure du réservoir 40 pour diriger celle-ci vers un échangeur 50, plus précisément, la pompe de gavage 49 récupère l'huile contenue dans une enceinte auxiliaire du réservoir 40 qui sera détaillée plus loin dans cette description.

Préférentiellement, le circuit de commande hydraulique 48 est aussi configuré pour commander hydrauliquement le système à calage variable en plus des fonctions de lubrification et de refroidissement. A cet égard, le circuit 48 comprend une pompe d'actionnement du pas 51 pouvant hydrauliquement commander un système d'actionnement du pas ou un actuateur hydraulique 52, ce dernier peut correspondre au premier et/ou au deuxième système à calage variable de la turbomachine.

Dans cette configuration, la pompe d'actionnement du pas 51 permet d'actionner l'actuateur hydraulique 52 entraînant le pivotement des pieds 30 et 38 de la figure 1.

Préférentiellement, le circuit de commande hydraulique 48 comprend une valve de by-pass 53 permettant le choix entre une fonction de refroidissement ou d'actionnement du pas du système à calage variable.

Le circuit 48 comprend au moins un retour d'huile vers le réservoir 40, 400, ce retour d'huile est préférentiellement accéléré par au moins une des pompes (49 et/ou 51).

Avantageusement, le système hydraulique 39 comprend une connexion (illustrée en pointillés) entre le circuit de commande hydraulique 48 et le circuit de lubrification 42 pour récolter des éventuelles fuites des vérins d'actuation des pas d'hélice et de réinjecter cette huile dans le réservoir 40 à partir d'une entrée 66.

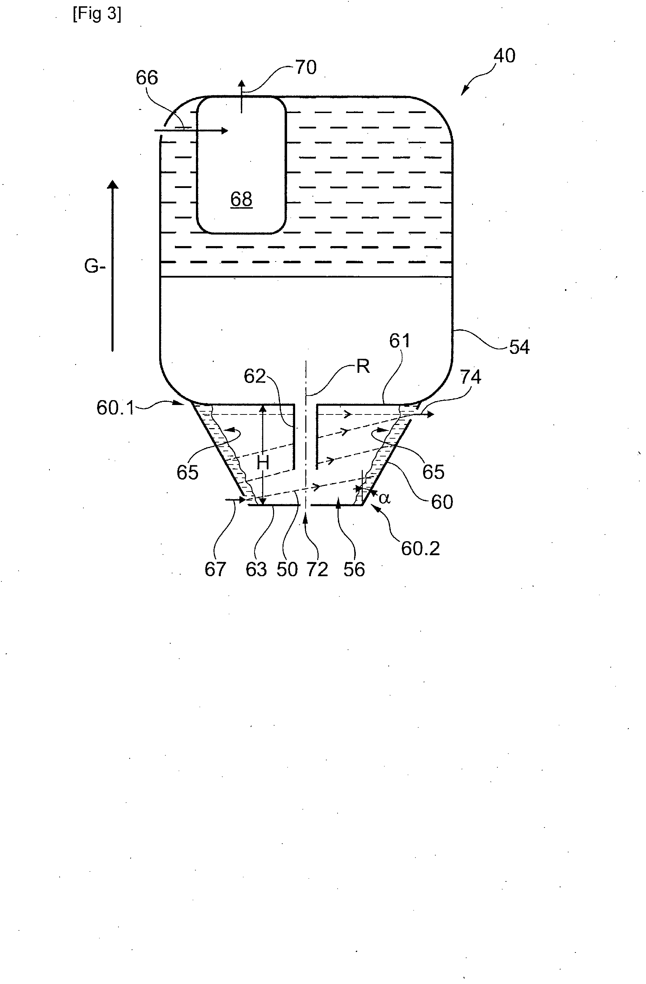

La figure 3 représente une vue en coupe d'un réservoir d'huile 40 selon un premier mode de réalisation de l'invention lors d'une phase de vol de l'aéronef en G négatif. A présent, G+ fera référence à une pesanteur positive et G- à une pesanteur négative.

Il est à noter que le réservoir 40 est apte à assurer une alimentation constante en huile lors de phases de vol en G-, et chacune des phases en G- dure entre une fraction de seconde et 45 secondes. Avantageusement, le réservoir 40 peut être dimensionné de manière à assurer une alimentation constante en huile même au-delà des 45 secondes.

A cet égard, le réservoir d'huile 40 comprend, une arrivée d'huile 66 mélangée à de l'air vers une enceinte principale 54 apte à contenir l'huile, et précisément vers un dispositif désaérateur d'huile 68, permettant d'évacuer l'air 70 mélangé avec l'huile à l'arrivée d'huile 66. L'arrivée d'huile 66 provient de préférence de l'au moins une pompe de récupération 46 de la figure 2.

Le réservoir 40 comprend une enceinte auxiliaire 56 disposée à l'intérieur de l'enceinte principale 54, et comprend une paroi enveloppante 60 avec deux parois d'extrémité 61, 63 adjacentes à ladite paroi enveloppante 60.

Avantageusement, l'agencement de l'enceinte auxiliaire 56 à l'intérieur de l'enceinte principale 54 permet d'obtenir un échange rapide des flux de l'huile entre ces deux derniers.

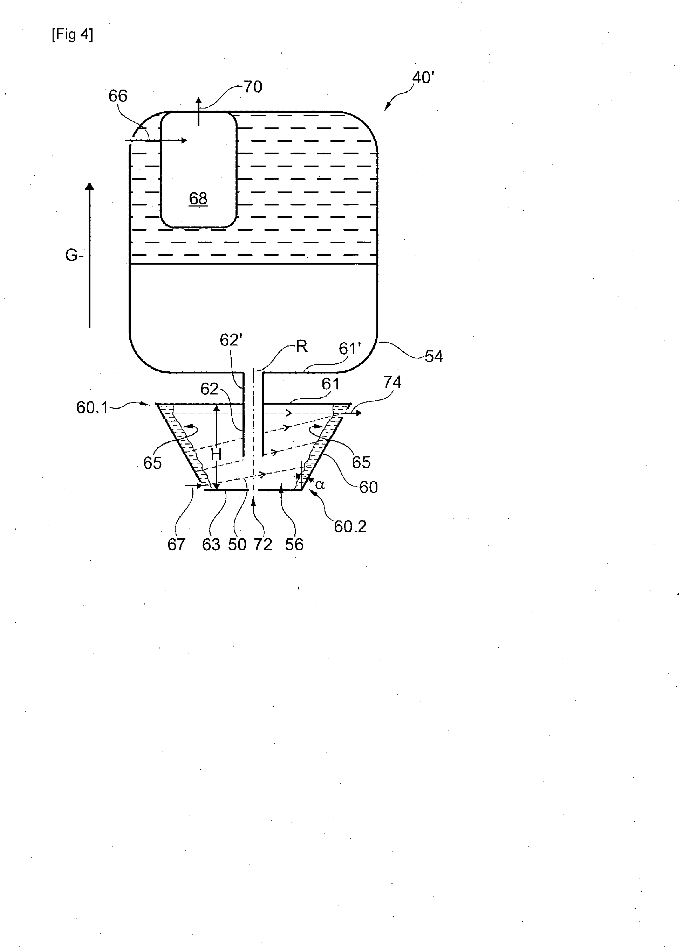

Cependant, dans une alternative (représentée à la figure 4), l'enceinte auxiliaire 56 est disposée extérieurement à l'enceinte principale 54 de manière à pouvoir intégrer le réservoir 40' dans un environnement particulièrement contraignant de la turbomachine. A cet égard, un ou plusieurs canalisations hydrauliques 62' peuvent relier les deux enceintes 54 et 56. Dans cette configuration, la ou les canalisations hydrauliques 62' peuvent être flexibles et/ou être confondus avec un canal 62.

On peut voir à la figure 4 que l'enceinte principale 54 du réservoir 40' comprend une paroi d'extrémité 61' correspondant à une paroi de fond 61' de l'enceinte principale 54. Cette dernière peut avantageusement avoir une forme conique de manière à faciliter la circulation d'huile vers le canal 62 lors du retour en G+.

En référence à la figure 3, la paroi enveloppante 60 correspond préférentiellement à une paroi circulaire conique 60 permettant de générer un écoulement circulaire et accéléré de l'huile au sein de l'enceinte auxiliaire 56. Un tel écoulement sera détaillé dans la présente description.

Alternativement, la paroi enveloppante 60 peut comprendre une forme différente en fonction des contions d'intégration et/ou des conditions de fonctionnement de la turbomachine. Par exemple, la paroi enveloppante 60 peut comprendre une forme cylindrique ou elliptique afin de faciliter l'intégration du réservoir 40 dans un environnement plus contraint.

Le réservoir 40 comprend également une sortie d'huile 72 disposée préférentiellement au droit de la paroi d'extrémité 63 dans l'enceinte auxiliaire 56.

Dans cette configuration, l'arrivée d'huile 66 et la sortie d'huile 72 forment un circuit correspondant au circuit de lubrification 42 de la figure 2.

Alternativement, la sortie d'huile 72 peut également se trouver sur une paroi latérale de l'enceinte principale 54.

Il est préférable que la paroi enveloppante 60 du réservoir 40 soit intégralement formée avec l'enceinte principale 54, cela permet de gagner en encombrement. Toutefois, il est possible que la paroi enveloppante 60 soit comprise dans l'enceinte auxiliaire 56 à distance des parois latérales de l'enceinte auxiliaire 56.

On peut voir également sur la figure 3 que les deux parois d'extrémité 61, 63 sont formées avec la paroi enveloppante 60, mais ces parois 61 et 63 peuvent aussi être à distance de la paroi enveloppante 60 en étant par exemple formées avec des parois latérales de l'enceinte principale 54.

La paroi d'extrémité 61 est une paroi d'extrémité supérieure 61, suivant la direction de la pesanteur (perpendiculaire au plan horizontal), et agencée dans un tronçon de plus grand diamètre 60.1 de la paroi enveloppante 60. Parallèlement, la paroi d'extrémité 63 est une paroi d'extrémité inférieure 63 agencée dans un tronçon de plus petit diamètre 60.2 de la paroi enveloppante 60.

La paroi d'extrémité supérieure 61 comprend un passage d'huile comprenant un canal 62 qui s'étend axialement (suivant un axe principal dudit canal) à l'intérieur de l'enceinte auxiliaire 56 et sur au moins 20% de l'étendue axiale totale de l'enceinte auxiliaire 56, et jusqu'à au moins 99% de ladite étendue totale, ce canal 62 permet à l'huile d'atteindre la sortie d'huile 72 en G+. Préférentiellement, le canal 62 s'étend sur 30% à 95% de l'étendue axiale totale de l'enceinte auxiliaire 56, et s'étend plus préférentiellement sur 30% à 70% de ladite étendue axiale.

De préférence, le canal 62 est dans une position centrale de la paroi d'extrémité supérieure 61 et en regard avec la sortie d'huile 72. Avantageusement, cela permet à l'huile d'atteindre rapidement la sortie 72 lors d'un retour en G+ après le G-.

Dans une alternative non représentée, la paroi d'extrémité supérieure 61 peut avoir une forme conique de manière à faciliter la circulation d'huile vers le canal 62 lors du retour en G+.

De manière avantageuse, le canal 62 permet la dilatation thermique de l'huile en utilisant le volume tampon (enceinte auxiliaire 56) du réservoir principal 40. De plus, le canal 62 permet de réinjecter dans le circuit auxiliaire (circuit 48 de la figure 2) l'huile qui est perdue au niveau des fuites des vérins d'actuation du pas d'hélice.

Le réservoir 40 comprend, en outre, une entrée auxiliaire 67 traversant l'enceinte principale 54 et proche de la paroi d'extrémité inférieure 63, cette entrée auxiliaire 67 débouche tangentiellement au tronçon 60.2.

L'entrée auxiliaire 67 correspond à un retour d'huile du circuit de commande hydraulique 48 de la figure 2. En effet, l'entrée auxiliaire 67 est configurée pour projeter l'huile accélérée du circuit de commande hydraulique vers la paroi enveloppante 60 de manière à engendrer un mouvement cyclonique ou un écoulement circulaire de l'huile 65 sur la paroi enveloppante 60. Un tel mouvement permet de mettre en rotation l'intégralité de l'huile dans l'enceinte auxiliaire afin de vaincre la gravité et d'atteindre une sortie auxiliaire 74 lors de toutes les phases de vol de l'aéronef (G+ et G0 et G-)

En effet, l'huile projetée sur la paroi enveloppante 60 comprend préférentiellement une accélération d'au moins 3g (g étant l'accélération de la pesanteur en m/s²) et pouvant, par exemple, correspondre à 6g. En effet, l'accélération de l'huile projetée au niveau de l'entrée auxiliaire 67 peut dépasser 6g en fonction du besoin et des conditions de fonctionnement.

Similairement à l'entrée auxiliaire 67, la sortie auxiliaire 74 est également tangentielle à la paroi enveloppante 60, et précisément au tronçon de plus grand diamètre 60.1 de ladite paroi 60. A cet égard, la sortie auxiliaire 74 traverse l'enceinte principale 54 afin de rejoindre le circuit de commande hydraulique 48 de la figure 1.

Avantageusement, chacun des tronçons de plus petit diamètre 60.2 et de plus grand diamètre 60.1 de la paroi enveloppante 60 correspond à moins de 50% d'une hauteur totale H de l'enceinte auxiliaire 56, et correspond préférentiellement à 25% de la hauteur H.

Dans la configuration illustrée à la figure 3, chacun de l'entrée auxiliaire 67 et de la sortie auxiliaire 74 est adjacent à la paroi d'extrémité 61, 63 correspondante.

Toutefois, la sortie auxiliaire 74 peut davantage être rapprochée de l'entrée auxiliaire 67 et inversement.

Préférentiellement, le mouvement cyclonique de l'huile 65 sur la paroi enveloppante 60 permet d'attendre une accélération de l'huile au droit de la sortie auxiliaire 72 qui soit d'environ 5g (dans l'exemple décrit). Cette valeur permet de sécuriser l'alimentation continue en huile du circuit de commande hydraulique lors de toutes les phases de vol de l'aéronef.

L'évènement G- illustré dans la figure 3 montre que l'huile 65 reste plaquée contre la paroi enveloppante 60, ce plaquage peut être atteint par une force centrifuge induite au moins en partie par un angle de conicité de la paroi enveloppante 60.

La paroi enveloppante 60 présente un axe principal R correspondant à la direction principale de l'étendue de ladite paroi 60. A cet effet, l'axe principal R définit le sens de la plus grande dimension de la paroi enveloppante 60 (la hauteur H).

Préférentiellement, l'axe principal R est coaxial au canal 62, ou incliné de moins de 30° par rapport audit canal 62. Toutefois, l'inclinaison de l'axe principal R par rapport au canal 62 peut aller jusqu'à 45° ou dépasser 45° pour former un angle inférieur à 90° avec le canal 62.

De préférence, l'axe principal R suit la direction de la pesanteur (perpendiculaire à l'horizontal). Toutefois, l'axe principal R peut être incliné par rapport à la direction de la pesanteur d'un angle pouvant aller jusqu'à 45° ou dépasser 45° jusqu'à former un angle inférieur à 90° avec ladite direction de la pesanteur.

De préférence, la paroi 60 du réservoir 40 présente une seule conicité identifiée par un angle de conicité α compris entre 0° (paroi 60 cylindrique) et 50°, et étant préférentiellement compris entre 20° et 45°, et étant encore plus préférentiellement égale à 30°. L'angle de conicité α est présenté entre la paroi enveloppante 60 et la direction principale.

Par ailleurs, la paroi d'extrémité supérieure 61 peut comprendre une vanne (non illustrée) ou un clapet sensible aux changements de la pesanteur et permettant de conserver l'huile dans l'enceinte auxiliaire 56 en G- et d'accélérer le retour d'huile dans ladite enceinte en G+.

De plus, paroi d'extrémité supérieure 61 peut, en outre, comprendre au moins un évent (non illustré) permettant d'évacuer l'air rapidement de l'enceinte auxiliaire 56 afin de permettre un retour rapide de l'huile vers ladite enceinte auxiliaire 56 lors d'un retour de l'aéronef en G+ après le G-.

L'enceinte 54 peut comprendre un baffle perforé (non illustré) agencé au-dessus de la paroi d'extrémité supérieure 61 et permettant de filtrer et purifier l'huile avant que cette dernière atteigne l'enceinte auxiliaire 56 en G+.

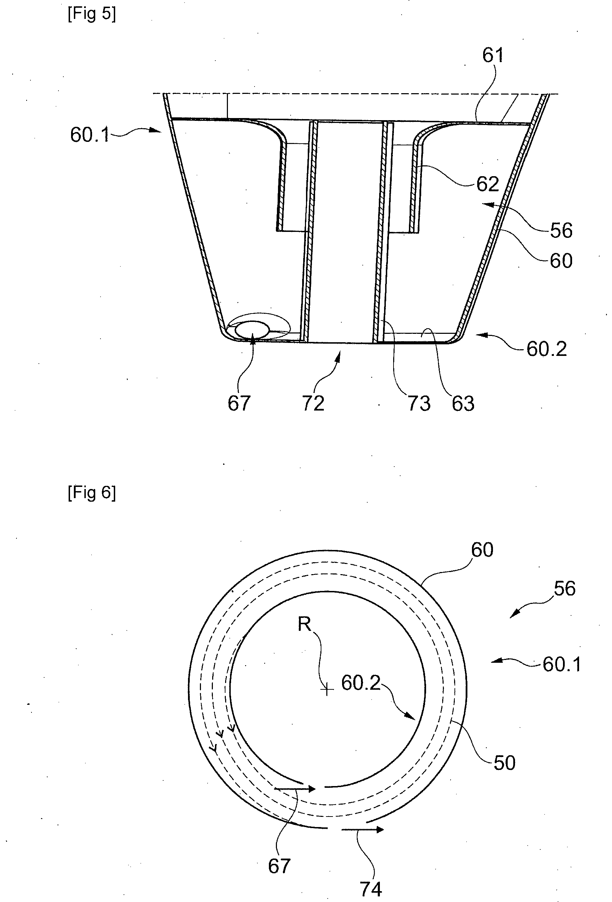

La figure 5 illustre une vue en coupe d'une variante de l'enceinte 56 de la figure 3, dans laquelle au droit de la paroi d'extrémité 63, la sortie d'huile 72 comprend un tube 73 s'étendant jusqu'à l'intérieur du canal 62 et de manière concentrique à ce dernier. Avantageusement, cela permet de prioriser le remplissage de l'enceinte auxiliaire 56 afin de toujours assurer une alimentation en huile et un retour rapide de l'huile vers la sortie 72 lors d'un retour en G+ après le G-.

La figure 6 est un schéma d'une vue d'au-dessus de la paroi enveloppante 60 du réservoir d'huile de la figure 3.

On peut bien distinguer les orientations tangentielles de l'entrée auxiliaire 67 et de la sortie auxiliaire 74. De manière avantageuse, cette orientation tangentielle des entrée et sortie auxiliaires 67, 74 permet de limiter les frottements pouvant survenir entre l'huile visqueux et la paroi enveloppante 60. Avantageusement, cette orientation permet de conserver au maximum la vitesse de l'huile sur la paroi enveloppante 60 de manière à ce que l'huile puisse avoir la trajectoire 50 lui permettant d'atteindre rapidement la sortie auxiliaire 74

Il est possible que la trajectoire 50 puisse être définie par des rainures formées dans la paroi enveloppante 60.

La figure 7 représente une vue en coupe d'un réservoir d'huile 400 selon un deuxième mode de réalisation de l'invention lors d'une phase de vol de l'aéronef en G-.

Les éléments identiques à ceux du premier mode de réalisation sont représentés par les mêmes références numériques, et les éléments présentant une différence seront représentés avec une incrémentation de 100.

En référence à la figure 7, le réservoir 400 comprend une paroi enveloppante 160 ayant cette fois deux conicités opposées. Dans cette configuration, la paroi enveloppante 160 comprend deux tronçons de plus petit diamètre 160.2 comprenant chacun une paroi d'extrémité supérieure 161 et inférieure 163, et un tronçon de plus grand diamètre 160.2 correspondant à une frontière entre les deux conicités, ladite frontière 160.2 étant préférentiellement dépourvu de paroi.

La paroi enveloppante 160 délimite une enceinte auxiliaire 156 à l'intérieur de l'enceinte principale 54. A cet effet, au moins 80% d'un volume de l'enceinte auxiliaire 156 est à l'intérieur de l'enceinte principale, et préférentiellement, l'intégralité du volume de l'enceinte auxiliaire 156 est à l'intérieur de l'enceinte principale 54.

Préférentiellement, la paroi enveloppante 160 est intégralement formée avec l'enceinte 54. A cet effet, ladite paroi 160 est reliée à l'enceinte par le moyen des tubes rigides 67.1 et 74.1 formant respectivement les entrée 67 et sortie 74 auxiliaires. Toutefois, ces tubes 67.1, 74.1 peuvent être flexibles et la paroi enveloppante 160 peut être rigidement reliée à l'enceinte par le moyen de la paroi d'extrémité 161 et/ou 163 pouvant s'étendre jusqu'à une paroi latérale de l'enceinte 54. A cet effet, des raidisseurs internes (non représentés) peuvent rigidement lier la paroi enveloppante 160 à l'enceinte principale 54.

Préférentiellement, chacune des deux parois d'extrémité 161 et 163 comprend le canal 62, ce dernier permet ici d'assurer un passage de l'huile entre l'enceinte auxiliaire 156 et l'enceinte principale 54.

L'évènement G- illustré dans la figure 7 montre que l'huile présente une trajectoire 50 à partir de chacune des deux entrées auxiliaires 67 et cela, jusqu'à la sortie auxiliaire 74 qui récupère l'huile ayant une accélération d'environ 5g au niveau de la frontière 106.2.

Avantageusement, le réservoir 400 selon le deuxième mode de réalisation, permet d'assurer une combinaison de deux mouvements cycloniques au sein de l'enceinte auxiliaire 156, cette combinaison permet d'éviter des variations du volume d'huile accéléré et d'éviter des variations d'accélération, ainsi, l'huile dans l'enceinte auxiliaire 156 est capable de facilement atteindre l'accélération de 5g en direction du circuit de commande hydraulique.

De préférence, le réservoir 40 selon le premier mode de réalisation ou le réservoir 400 selon le deuxième mode de réalisation de la présente invention est obtenu par fabrication additive.

De manière avantageuse, la turbomachine de la présente invention est capable d'assurer un fonctionnement continu et sécurisé de ses systèmes à calage variable grâce au réservoir principal d'huile permettant d'assurer un gavage en huile afin d'alimenter de tels systèmes en huile sans aucune présence d'air et sans interruption d'alimentation lors des phases de vol en pesanteur nulle ou négative.

## Revendications

1. Réservoir d'huile (40 ; 400) pour turbomachine (2) d'aéronef, comprenant :
- une enceinte principale (54) apte à contenir l'huile ;
- une entrée d'huile (66) mélangée à de l'air, disposée sur l'enceinte principale (54) ;
- une sortie d'huile (72) ;
- une enceinte auxiliaire (56 ; 156) comprenant une paroi enveloppante (60 ;160), et deux parois d'extrémité (61, 63 ; 161, 163) adjacentes à ladite paroi enveloppante (60), au moins une des deux parois d'extrémité (61, 63 ; 161, 163) comprenant au moins un passage d'huile (62) avec l'intérieur de l'enceinte principale (54), **caractérisé en ce que** le réservoir d'huile (40; 400) comprend en outre
- au moins une entrée auxiliaire (67) débouchant de manière tangentielle à la paroi enveloppante (60 ; 160) et traversant l'enceinte auxiliaire (56 ; 156) pour une connexion à un circuit auxiliaire (48) ;
- une sortie auxiliaire (74), tangentielle à un tronçon de plus grand diamètre (60.1 ; 160.1) de la paroi enveloppante (60 ; 160), ladite sortie auxiliaire (74) traversant l'enceinte auxiliaire (56 ; 156) pour une connexion au circuit auxiliaire (48), la sortie d'huile (72) étant disposée sur l'enceinte auxiliaire (56) ou sur l'enceinte principale (54).

2. Réservoir d'huile (40 ; 400) selon la revendication 1, dans lequel la paroi enveloppante (60 ; 160) est intégralement formée avec l'enceinte principale (54), et ladite paroi enveloppante (60 ; 160) comprend préférentiellement une forme circulaire conique.

3. Réservoir d'huile (40 ; 400) selon la revendication 2, dans lequel l'au moins une entrée auxiliaire (67) débouche de manière tangentielle à un tronçon de plus petit diamètre (60.2 ; 160.2) de la paroi enveloppante (60 ; 160).

4. Réservoir d'huile (40 ; 400) selon l'une des revendications 1 à 3, dans lequel l'au moins un passage d'huile (62) est en position centrale sur la paroi d'extrémité (61 ; 161, 163) correspondante.

5. Réservoir d'huile (40 ; 400) selon l'une des revendications 1 à 4, dans lequel l'au moins un passage d'huile (62) comprend un canal (62) s'étendant axialement depuis la paroi d'extrémité (61 ; 161, 163) correspondante à l'intérieur de l'enceinte auxiliaire (56 ; 156).

6. Réservoir d'huile (40 ; 400) selon la revendication 5, dans lequel l'au moins un canal (62) s'étend sur au moins 30% ou 20% d'une étendue axiale totale de l'enceinte auxiliaire (54).

7. Réservoir d'huile (40 ; 400) selon l'une des revendications 1 à 6, dans lequel l'au moins une entrée auxiliaire (67) est à proximité d'une des deux parois d'extrémité (63 ; 161, 163).

8. Réservoir d'huile (40) selon l'une des revendications 1 à 7, dans lequel la sortie auxiliaire (74) est à proximité d'une des deux parois d'extrémité (61).

9. Réservoir d'huile (40 ; 400) selon l'une des revendications 1 à 8, dans lequel la paroi enveloppante (60 ; 160) présente un angle de conicité (α) compris entre 0° et 50°.

10. Réservoir d'huile (40) selon l'une des revendications 1 à 9, dans lequel la paroi enveloppante (60) comprend une seule conicité.

11. Réservoir d'huile (400) selon l'une des revendications 1 à 10, dans lequel la paroi enveloppante circulaire conique (160) comprend deux conicités opposées, la sortie auxiliaire (74) étant située à une frontière (160.1) entre les deux conicités.

12. Réservoir d'huile (400) selon la revendication 10, dans lequel l'au moins une entrée auxiliaire (67) comprend une entrée auxiliaire (67) à chacune des deux extrémités (161, 163) axiales de la paroi circulaire conique (160).

13. Réservoir d'huile (40 ; 400) selon l'une des revendications 1 à 11, dans lequel au moins 80% d'un volume de l'enceinte auxiliaire (56 ; 156) est situé dans une moitié inférieure de l'enceinte principale (54), lorsque le réservoir d'huile (40 ; 400) est orienté suivant une position normale de montage.

14. Réservoir d'huile (40 ; 400) selon l'une des revendications 1 à 13, dans lequel la paroi enveloppante (60 ; 160) présente un axe principal (R) coaxial au canal (62) ou incliné de moins de 45° par rapport audit canal (62).

15. Système hydraulique (39) pour turbomachine (2) d'aéronef comprenant :
- un réservoir d'huile (40 ; 400) ;
- un circuit de lubrification (42) de la turbomachine (2), relié hydrauliquement au réservoir d'huile (40 ; 400) ;
- un circuit de commande hydraulique (48) d'au moins un actuateur hydraulique (52), relié hydrauliquement au réservoir d'huile (40 ; 400) ;
**caractérisé en ce que** le réservoir d'huile (40 ; 400) est selon l'une des revendications 1 à 14.

16. Système hydraulique (39) selon la revendication 15, dans lequel le circuit de lubrification (42) étant relié hydrauliquement à l'entrée d'huile (66) mélangée à de l'air et à la sortie d'huile (72), le circuit de commande hydraulique (48) étant relié hydrauliquement à l'au moins une entrée auxiliaire (67) et à la sortie auxiliaire (74).

17. Turbomachine (2) d'aéronef, comprenant :
- une hélice (14) non carénée propulsant un flux d'air entrant (F), ladite hélice (14) comprenant des aubes (28) à calage variable actionnées par au moins un actuateur hydraulique (52) ;
- un système hydraulique (39) apte à assurer une lubrification de la turbomachine (2) et à commander l'au moins un actuateur hydraulique (52) ; **caractérisé en ce que** le système hydraulique (39) est selon l'une des revendications 15 ou 16.

## Patentansprüche

1. Öltank (40; 400) für eine Flugzeugturbomaschine (2) umfassend:
- ein Hauptgehäuse (54), das geeignet ist, das Öl aufzunehmen;
- einen Öl-Einlass (66), der mit Luft gemischt ist und auf dem Hauptgehäuse (54) angeordnet ist;
- einen Öl-Auslass (72);
- ein Zusatzgehäuse (56; 156) umfassend eine Umschließungswand (60; 160) und zwei Endwände (61, 63; 161, 163), die an die genannte Umschließungswand (60) angrenzen, wobei mindestens eine der beiden Endwände (61, 63; 161, 163) mindestens einen Ölkanal (62) mit dem Inneren des Hauptgehäuses (54) umfasst, **gekennzeichnet dadurch, dass** der Öltank (40; 400) weiterhin umfasst:
- mindestens einen Zusatz-Einlass (67), der tangential zur Umschließungswand (60; 160) mündet und das Zusatzgehäuse (56; 156) durchquert zur Verbindung mit einem Zusatzkreislauf (48);
- einen Zusatz-Auslass (74), tangential zu einem Abschnitt mit größerem Durchmesser (60.1; 160.1) der Umschließungswand (60; 160), wobei der genannte Zusatz-Auslass (74) das Zusatzgehäuse (56; 156) durchquert zur Verbindung mit dem Zusatzkreislauf (48), wobei der Öl-Auslass (72) an dem Zusatzgehäuse (56) oder dem Hauptgehäuse (54) angeordnet ist.

2. Öltank (40; 400) gemäß Anspruch 1, wobei die Umschließungswand (60; 160) integral mit dem Hauptgehäuse (54) gebildet ist und die genannte Umschließungswand (60; 160) vorzugsweise eine konische Form hat.

3. Öltank (40; 400) gemäß Anspruch 2, wobei der mindestens eine Zusatz-Einlass (67) tangential zu einem Abschnitt kleinerer Durchmesser (60.2; 160.2) der Umschließungswand (60; 160) mündet.

4. Öltank (40; 400) gemäß einem der Ansprüche 1 bis 3, wobei der mindestens eine Ölkanal (62) zentral an der entsprechenden Endwand (61; 161, 163) positioniert ist.

5. Öltank (40; 400) gemäß einem der Ansprüche 1 bis 4, wobei der mindestens eine Ölkanal (62) einen Kanal (62) umfasst, der sich axial von der entsprechenden Endwand (61; 161, 163) in das Innere des Zusatzgehäuses (56; 156) erstreckt.

6. Öltank (40; 400) gemäß Anspruch 5, wobei der mindestens eine Kanal (62) sich über mindestens 30% oder 20% einer gesamten axialen Ausdehnung des Zusatzgehäuses (56; 156) erstreckt.

7. Öltank (40; 400) gemäß einem der Ansprüche 1 bis 6, wobei der mindestens eine Zusatz-Einlass (67) in der Nähe von einer der beiden Endwände (63; 161, 163) ist.

8. Öltank (40) gemäß einem der Ansprüche 1 bis 7, wobei der Zusatz-Auslass (74) in der Nähe einer der beiden Endwände (61) ist.

9. Öltank (40; 400) gemäß einem der Ansprüche 1 bis 8, wobei die Umschließungswand (60; 160) einen Konizitätswinkel (a) zwischen 0° und 50° aufweist.

10. Öltank (40) gemäß einem der Ansprüche 1 bis
9, wobei die Umschließungswand (60) nur eine Konizität umfasst.

11. Öltank (400) gemäß einem der Ansprüche 1 bis 10, wobei die konische, kreisförmige Umschließungswand (160) zwei entgegengesetzte Konizitäten umfasst, wobei der Zusatz-Auslass (74) an einer Grenze (160.1) zwischen den beiden Konizitäten angeordnet ist.

12. Öltank (400) gemäß Anspruch 10, wobei der mindestens eine Zusatz-Einlass (67) einen Zusatz-Einlass (67) an jedem der beiden axialen Enden (161, 163) der konischen, kreisförmigen Umschließungswand (160) umfasst.

13. Öltank (40; 400) gemäß einem der Ansprüche 1 bis 11, wobei mindestens 80% des Volumens des Zusatzgehäuses (56; 156) sich in einer unteren Hälfte des Hauptgehäuses (54) befinden, wenn der Öltank (40; 400) in einer normalen Montageposition ausgerichtet ist.

14. Öltank (40; 400) gemäß einem der Ansprüche 1 bis 13, wobei die Umschließungswand (60; 160) eine Hauptachse (R) koaxial zum Kanal (62) oder weniger als 45° gegenüber dem genannten Kanal (62) geneigt aufweist.

15. Hydraulisches System (39) für eine Flugzeugturbomaschine (2) umfassend:
- einen Öltank (40; 400);
- einen Schmierungskreislauf (42) der Turbomaschine (2) verbunden hydraulisch mit dem Öltank (40; 400);
- einen hydraulischen Steuerungskreislauf (48) von mindestens einem hydraulischen Aktuator (52), verbunden hydraulisch mit dem Öltank (40; 400); **gekennzeichnet dadurch, dass** der Öltank (40; 400) gemäß einem der Ansprüche 1 bis 14 ist.

16. Hydraulisches System (39) gemäß Anspruch 15, wobei der Schmierungskreislauf (42) hydraulisch verbunden ist mit dem mit Luft gemischten Öleinlass (66) und dem Ölauslass (72), der hydraulische Steuerungskreislauf (48) hydraulisch verbunden ist mit dem mindestens einen Zusatzeinlass (67) und dem Zusatz-Auslass (74).

17. Flugzeugturbomaschine (2) umfassend:
- einen nicht verkleideten Propeller (14), der einen einströmenden Luftstrom (F) antreibt, wobei der genannte Propeller (14) verstellbare Schaufeln (28) umfasst, die durch mindestens einen hydraulischen Aktuator (52) betätigt werden;
- ein hydraulisches System (39) geeignet, eine Schmierung der Turbomaschine (2) sicherzustellen und mindestens einen hydraulischen Aktuator (52) zu steuern; **gekennzeichnet dadurch, dass** das hydraulische System (39) gemäß einem der Ansprüche 15 oder 16 ist.

## Claims

1. An oil tank (40; 400) for an aircraft turbomachine (2), comprising:
- a main chamber (54) adapted to contain the oil;
- an oil inlet (66) for oil mixed with air, disposed on the main chamber (54);
- an oil outlet (72);
- an auxiliary chamber (56; 156) comprising an enclosing wall (60; 160), and two end walls (61, 63; 161, 163) adjacent to said enclosing wall (60), at least one of the two end walls (61, 63; 161, 163) comprising at least one oil passage (62) communicating with the interior of the main chamber (54), **characterized in that** the oil tank (40; 400) further comprises
- at least one auxiliary inlet (67) opening tangentially to the enclosing wall (60; 160) and passing through the auxiliary chamber (56; 156) for connection to an auxiliary circuit (48);
- an auxiliary outlet (74), tangential to a larger diameter section (60.1; 160.1) of the enclosing wall (60; 160), said auxiliary outlet (74) passing through the auxiliary chamber (56; 156) for connection to the auxiliary circuit (48), the oil outlet (72) being disposed on the auxiliary chamber (56) or on the main chamber (54).

2. The oil tank (40; 400) according to claim 1, in which the enclosing wall (60; 160) is integrally formed with the main chamber (54), and said enclosing wall (60; 160) preferably comprises a conical circular shape.

3. The oil tank (40; 400) according to claim 2, in which the at least one auxiliary inlet (67) opens tangentially to a smaller diameter section (60.2; 160.2) of the enclosing wall (60; 160).

4. The oil tank (40; 400) according to any one of claims 1 to 3, in which the at least one oil passage (62) is centrally positioned on the corresponding end wall (61; 161, 163).

5. The oil tank (40; 400) according to any one of claims 1 to 4, in which the at least one oil passage (62) comprises a channel (62) extending axially from the corresponding end wall (61; 161, 163) to the interior of the auxiliary chamber (56; 156).

6. The oil tank (40; 400) according to claim 5, in which the at least one channel (62) extends over at least 30% or 20% of a total axial extent of the auxiliary chamber (56; 156).

7. The oil tank (40; 400) according to any one of claims 1 to 6, in which the at least one auxiliary inlet (67) is proximate to one of the two end walls (63; 161, 163).

8. The oil tank (40) according to any one of claims 1 to 7, in which the auxiliary outlet (74) is proximate to one of the two end walls (61).

9. The oil tank (40; 400) according to any one of claims 1 to 8, in which the enclosing wall (60; 160) has a conicity angle (a) between 0° and 50°.

10. The oil tank (40) according to any one of claims 1 to 9, in which the enclosing wall (60) has a single conicity.

11. The oil tank (400) according to any one of claims 1 to 10, in which the conical circular enclosing wall (160) has two opposed conicities, the auxiliary outlet (74) being located at a border (160.1) between the two conicities.

12. The oil tank (400) according to claim 10, in which the at least one auxiliary inlet (67) comprises an auxiliary inlet (67) at each of the two axial ends (161, 163) of the conical circular enclosing wall (160).

13. The oil tank (40; 400) according to any one of claims 1 to 11, in which at least 80% of a volume of the auxiliary chamber (56; 156) is located in a lower half of the main chamber (54) when the oil tank (40; 400) is oriented in a normal mounting position.

14. The oil tank (40; 400) according to any one of claims 1 to 13, in which the enclosing wall (60; 160) has a main axis (R) coaxial with the channel (62) or inclined by less than 45° relative to said channel (62).

15. A hydraulic system (39) for an aircraft turbomachine (2) comprising:
- an oil tank (40; 400);
- a lubrication circuit (42) of the turbomachine (2), hydraulically connected to the oil tank (40; 400);
- a hydraulic control circuit (48) of at least one hydraulic actuator (52), hydraulically connected to the oil tank (40; 400); **characterized in that** the oil tank (40; 400) is according to any one of claims 1 to 14.

16. The hydraulic system (39) according to claim 15, in which the lubrication circuit (42) is hydraulically connected to the oil inlet (66) for oil mixed with air and to the oil outlet (72), the hydraulic control circuit (48) being hydraulically connected to the at least one auxiliary inlet (67) and to the auxiliary outlet (74).

17. An aircraft turbomachine (2) comprising:
- an uncowled propeller (14) propelling an incoming air flow (F), said propeller (14) comprising variable pitch blades (28) actuated by at least one hydraulic actuator (52);
- a hydraulic system (39) capable of ensuring lubrication of the turbomachine (2) and controlling the at least one hydraulic actuator (52); **characterized in that** the hydraulic system (39) is according to any one of claims 15 or 16.
